Europäisches Patentamt

European Patent Office

Office européen des brevets

(19)

(11) Publication number: 0 251 986
A2

(12) # EUROPEAN PATENT APPLICATION

(21) Application number: 87630119.3

(22) Date of filing: 02.07.87

(51) Int. Cl.⁴: H 04 Q 5/02

(30) Priority: 02.07.86 IL 79315   16.04.87 IL 82234

(43) Date of publication of application:
07.01.88   Bulletin   88/01

(84) Designated Contracting States:
AT BE CH DE ES FR GB GR IT LI LU NL SE

(71) Applicant: ECI TELECOM LTD.
88 Yigal Allon Street
Tel Aviv (IL)

(72) Inventor: Piasecki, Joshua
6 Armonim Street
Ramat Gan (IL)

Zohar, Israel
29 Laskov Street
Holon (IL)

Zalitzky, Yeshayahu
17 Tel-Hay Street
Raanana (IL)

Haviv, Pinchas
33 Weizmann Street
Holon (IL)

(74) Representative: Waxweiler, Jean et al
OFFICE DENNEMEYER S.à.r.l. P.O. Box 1502
L-1015 Luxembourg (LU)

(54) Telephone line multiplication apparatus with improved ringing generator.

(57) A telephone line multiplication apparatus for connecting a plurality of telephone subscribers to a telephone exchange over a single two-wire telephone line which may carry voice and/or digital data information and control signal information such as off-hook/on-hook, dialing, ringing, metering and the like, wherein voice and/or digital data information is communicated with a first one of the plurality of telephone subscribers in digital form, and voice information is communicated with a second one of the plurality of telephone subscribers in analog form, characterized in that the control signal information relating to the operation of the second subscriber is communicated in digital form. The interface between the analog and digital communications channels is effected by a line interface providing impedance matching with the line impedance, wherein the analog channel is coupled by a connection with a portion of the two-wire telephone line impedance across a series capacitor which provides a preliminary stage of low-pass filtering. An improved ringing generator is also provided for powering the subscriber loads based on remote power feeding from the telephone exchange.

FIG. 1B

**0 251 986**

**Description**

## TELEPHONE LINE MULTIPLICATION APPARATUS WITH IMPROVED RINGING GENERATOR

### FIELD OF THE INVENTION

The present invention relates to telephony generally and more particularly to telephone line multiplication apparatus including ringing generator apparatus for multi-subscriber lines on a single subscriber side terminal of a communications network.

### BACKGROUND OF THE INVENTION

Various types of telephone line multiplication apparatus are known in the market and in the patent literature. The earliest such apparatus, known as Time Assignment Speech Interpolation (TASI) Apparatus was developed by Fraser et al at Bell Telephone Laboratories in the 1950's. A highly developed and commercially successful TASI system is described and claimed in applicant/assignee's U.S. Patent 4,523,309.

Apparatus of the type described in the aforesaid U.S. Patent 4,523,309 provides up to 2:1 multiplication of line capacity in appropriate statistical environments.

There has also been proposed Integrated Service Digital Network (ISDN) apparatus which is operative to provide two digitally transmitted voice services simultaneously over a single 2 wire telephone line.

Another proposal for telephone multiplication apparatus is suggested by the " digital 1 +1 " telephone system described in the paper by Fuchs and Bradshaw published in the journal "Telephony", March 18, 1985. This system uses a digital channel superimposed on a conventional analog speech channel, with the digital channel carrying its own control signal information in digital form, and the analog channel carrying its own control signal information in conventional analog form. The ringing and dialing control signals for the analog channel are characterized by high amplitude, in the range of tens of volts, and include impulses with components in a wide frequency spectrum. Some of these components have sufficiently high amplitude transients in the frequency range of the digital channel to cause undesired interference. This problem is compounded at the digital channel receiver where the received communication, after having traveled over the line, is weaker than the locally generated control signals for the analog channel so that the interference is even greater.

The Fuchs and Bradshaw paper describes a solution to this problem which involves the use of a separation filter designed "...to separate the high frequency components of ringing and dial pulsing from the digital signal spectrum range," at page 78, col. 3. However, this solution imposes severe design constraints on the separation filter and limits the use of line codes for the digital channel transmission to those that have a minimal spectral overlap with the control signals for the analog channel. These line codes are sub-optimal for achieving long distance transmission with high quality.

It would therefore be desirable to avoid the interaction between the control signals of the analog channel and the digital communication.

In known communication systems where telephone line multiplication apparatus is used, such as in the aforementioned ISDN apparatus, and in analog one-plus-one communication systems, power is fed from the exchange side terminal to a remote subscriber side terminal, or power may be provided by a local power source as a backup under conditions of normal power interruption. However, energy constraints are a factor because of the limited input power available from the exchange side terminal or the backup battery.

At the present time, there are many varied subscriber telephone unit designs used in telephone communication networks. A key communications system design problem presented by these varied subscriber unit designs is the fact that these units often have different load impedances and different levels of ringing voltage sensitivity. The result from a network point of view is a mixed impedance and mixed voltage level sensitivity and overall power requirements which may not be suited to the limited power situation described above. In addition, the tendency for subscribers to connect additional units on a single exchange increases the complexity of the network impedance presented to the ringing generator.

For example, in the case of an automatic answering machine used as a subscriber unit, a high impedance is presented and a high ringing voltage is required to begin the operation. In contrast, an electromechanical ringer presents a relatively low impedance requiring a lower ringing voltage. In another example, many electromechanical units are designed to include a thermistor in series with the ringer, which increases the initial impedance presented to the ringing generator. The thermistor exhibits a negative resistance characteristic, so that after a high initial voltage is applied, the resistance decreases and the voltage requirements are diminished.

In the prior art, the optimum design of the ringing generator was that of a constant voltage source used to supply the demand for load current up to its maximum rated limit. This would enable it to supply the high voltage for the automatic answering machine, but this means it is overdesigned for the other two cases of low impedance. Further, this design cannot be applied in a limited power input arrangement, as the demand is too great.

Thus, in the case of telephone line multiplication apparatus described earlier, the problems of mixed impedances present energy balance problems which are particularly important in this type of arrangement where a single ringing generator is relied upon.

It would therefore be desirable to provide telephone line multiplication apparatus with a ringing generator which can efficiently handle the impedances which are presented to it by a telephone communications network.

## SUMMARY OF THE INVENTION

The present invention seeks to provide line multiplication apparatus which, while partially based on ISDN type techniques, provides 50% greater line multiplication than proposed ISDN apparatus, i.e. 3:1 multiplication. An analog and two digital channels of communication are provided, with control signal information for the analog channel being passed via the digital channel and being regenerated at the other side of the communication network.

There is thus provided in accordance with a preferred embodiment of the present invention telephone line multiplication apparatus comprising apparatus for connecting a plurality of telephone subscribers to a telephone exchange over a single 2-wire telephone line which carries voice information and control signal information such as off-hook/on-hook, dialing, ringing, metering and the like, wherein the connecting apparatus comprises a subscriber side terminal and an exchange side terminal interconnected by the telephone line, first apparatus for communicating voice information with at least one of the plurality of telephone subscribers in digital form, second apparatus for communicating voice information with at least one of the plurality of telephone subscribers in analog form, and means for communicating the control signal information, wherein the control signal information communication means is characterized in that it communicates the control signal information relating to the operation of the second apparatus in digital form.

In accordance with a preferred embodiment of invention, the power required by the subscriber side terminal is provided remotely from the exchange side terminal over the 2-wire telephone line.

Also in accordance with a preferred embodiment of the present invention, the plurality of telephone subscribers comprises three telephone subscribers.

Additionally in accordance with the above preferred embodiment of the invention, the apparatus for communicating in digital form is operative to provide audio communication for two subscribers along with the control signal information for all the three subscribers.

Further in accordance with a preferred embodiment of the invention, the subscriber side terminal includes an analog-digital interface, apparatus coupling at least one first telephone subscriber to the analog-digital interface, digital modem apparatus coupling the analog-digital interface to the 2-wire telephone line, and analog transmission apparatus coupling at least one second telephone subscriber to the 2-wire telephone line.

Additionally in accordance with a preferred embodiment of the invention, the digital modem may be operated to transmit digital data on at least a portion of the total line transmission capacity.

Still further in accordance with a preferred embodiment of the invention, the exchange side terminal includes an analog-digital interface, apparatus coupling at least one first telephone exchange subscriber interface to the analog-digital interface, digital modem apparatus coupling the analog-digital interface to the 2-wire telephone line, and analog transmission apparatus coupling at least one second telephone exchange subscriber interface to the 2-wire telephone line.

Additionally in accordance with an embodiment of the invention, known speech compression apparatus such as ADPCM apparatus may be associated with the first subscriber coupling apparatus for providing further line multiplication. In this manner, the coupling apparatus may provide communications of voice information in digital form to twice or four times the number of subscribers as otherwise.

Also in accordance with a preferred embodiment of the invention, the analog transmission apparatus is coupled to the 2-wire telephone through a line interface for matching the impedance of the line, wherein the coupling is via a portion of the line impedance across a series capacitor which provides a preliminary stage of low-pass filtering.

Still further in accordance with a preferred embodiment of the invention, the first subscriber coupling apparatus is operative to communicate in a differential biphase code, characterized in that it has a low spectral content at low frequencies.

In another embodiment of the present invention, there is provided an improved AC ringing power generator for the subscriber side terminal which receives the remotely fed input power from the exchange side terminal and is capable of supplying the necessary power to the ringing sets of all of the subscriber telephone units connected to it.

In this embodiment of the invention, the power provided remotely from the exchange side terminal is fed as input power to an improved ringing generator apparatus for delivering power to the load presented by the plurality of telephone subscribers, wherein the ringing generator apparatus comprises apparatus for storing energy, controller apparatus operable to determine a duty cycle within which the input power is applied to the energy storage apparatus for storing energy therein at a fixed level such that the input power utilized is constant, inverter apparatus for generating AC ringing power to be delivered to the load, and apparatus for transferring the stored energy to the inverter apparatus such that the AC ringing power is generated at a level in accordance therewith, wherein the AC ringing power is delivered to the load at an output voltage determined by the load impedance characteristics.

In a preferred embodiment, the ringing generator is provided as a constant energy flyback converter, which receives a controllable power input based on the operation of a pulse-width modulated (PWM) controller. The converter includes an inductor used as an energy storage means and a capacitor used as an energy transfer means. The input power is applied to the inductor based on the operation of the PWM controller, and the capacitor receives the stored energy from the inductor for transfer as output power through an output transformer to the load.

The output power is provided at the output transformer secondary as AC ringing power at a predetermined frequency determined by an inverter. The inverter is driven by an oscillator which controls the operation of a pair of transistor switches between which the output transformer primary is connected.

Since the power input to the converter is controllable via the PWM controller, the amount of input power used to store energy in the inductor can be fixed within a given time period with the result that the energy stored in the inductor is limited to a constant value. The utilization of this constant energy as output power is then automatically optimized by the impedances which constitute the telephone loads on the subscriber side terminal.

In the case of the automatic answering machine, the ringing generator develops an initial voltage high enough to begin the automatic operation. In the case of a load comprising a thermistor used in series with a ringing set, a high voltage from the ringing generator is required only at the beginning of a ringing cycle. Once the thermistor operating characteristic has lowered the impedance of the load, the output power is supplied by the ringing generator at a lower voltage without a noticeable change in the volume of the ringing sound produced.

A feature of the invention is the provision of a switching device through which the output power is supplied in a time sharing fashion, allowing for multiple subscribers on the subscriber side terminal. The ringing period is divided into time intervals during which each of the impedances of the subscribers is alternately switched as a load on the ringing generator.

Another feature of the invention is the provision of a recovery time period between the end of a ringing interval on one telephone load and the start of the next ringing interval on the next telephone. This allows the ringing generator to develop the output power with the highest voltage possible for the beginning of the next ringing interval so as to overcome the initial high impedance of a thermistor or satisfy an automatic answering machine operation requirement.

Other features and advantages of the invention will become apparent from the drawings and the description contained hereinbelow.

## BRIEF DESCRIPTION OF THE DRAWINGS

The present invention will be understood and appreciated more fully from the following detailed description taken in conjunction with the drawings in which:

Fig. 1A is a block diagram illustration of the state of the prior art;

Fig. 1B is a block diagram illustration of telephone line multiplication apparatus constructed and operative in accordance with a preferred embodiment of the present invention;

Figs. 2A and 2B are block diagram illustrations of the subscriber side terminal of the apparatus of Fig. 1B;

Figs. 3A, 3B and 3C show a timing arrangement of a portion of the subscriber side terminal of Figs. 2A - 2B;

Figs 4A and 4B are block diagrams of the line interface associated respectively with the subscriber side terminal and an exchange side terminal of the apparatus of Fig. 1B;

Figs. 5A and 5B are block diagram illustrations of the exchange side terminal of the apparatus of Fig. 1B;

Fig. 6 is a block diagram of an alternative arrangement of the subscriber side terminal of Figs. 2A-2B featuring an improved ringing generator for use with the telephone line multiplication apparatus of Fig. 1B;

Fig. 7 is a schematic circuit diagram of the preferred embodiment of the ringing generator used with Fig. 6, showing an inductor for energy storage;

Fig. 8 is a graphical illustration of the current in the primary coil of the inductor of Fig. 7 as a function of the input voltage;

Fig. 9 is a schematic circuit diagram of a time sharing switching device for a plurality of subscribers; and

Fig. 10 is a timing diagram illustrating the operation of the circuit of Fig. 9.

## DETAILED DESCRIPTION OF A PREFERRED EMBODIMENT

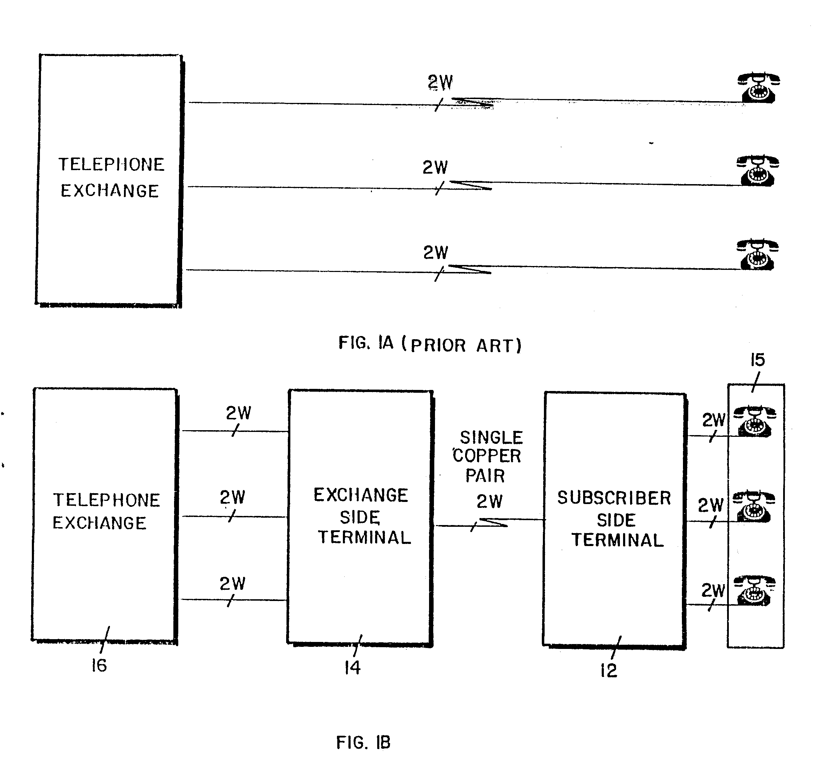

Reference is now made to Fig. 1A which illustrates the location of subscriber line multiplication apparatus in a conventional telephone network. Normally each telephone subscriber is connected via a separate two-wire (2W) copper pair to a telephone exchange as shown.

Reference is now made to Fig. 1B which illustrates the subscriber line multiplication apparatus as provided in accordance with the present invention. The subscriber line multiplication apparatus is comprised of a subscriber side terminal 12 and an exchange side terminal 14 and enables up to three telephone subscribers forming a subscriber group 15 to be connected to a telephone exchange via a single copper pair, extending over a distance up to 3-4 kilometers.

Subscriber side terminal 12 is connected to up to three telephone subscribers via 2W lines for each subscriber and via a single two wire (2W) line to exchange side terminal 14. Exchange side terminal 14 is connected to a telephone exchange 16 via a 2W line for each subscriber. Subscriber side terminal 12 is normally located near the subscriber's premises, typically within 500 meters from each subscriber. Exchange side terminal 14 is typically located in the same building as telephone exchange 16.

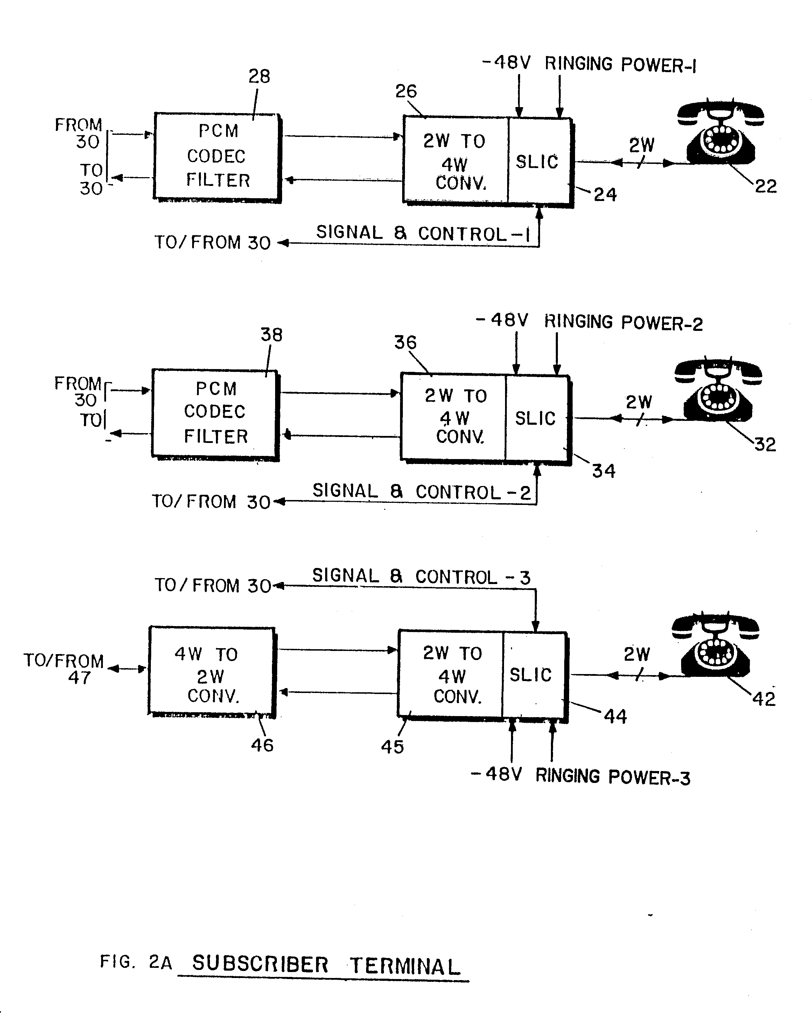

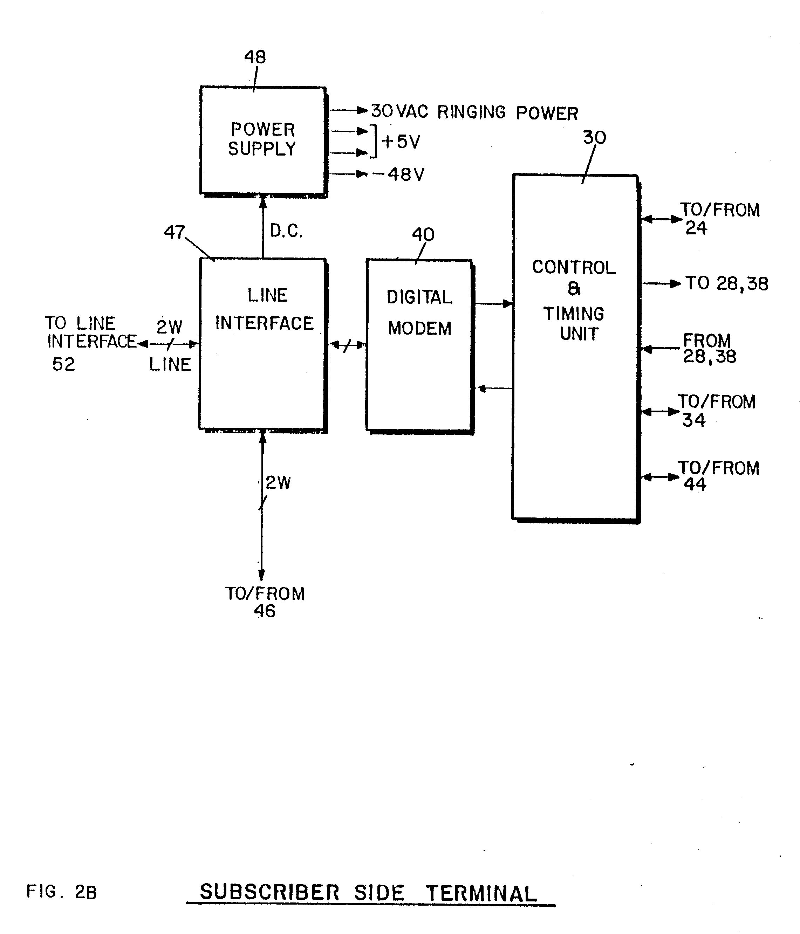

Reference is now made to Figs. 2A and 2B which illustrate in block diagram form subscriber side terminal 12 of Fig. 1B. A subscriber 22 is connected via a 2W telephone line to Subscriber Line Interface Circuitry (SLIC) 24. The functions of SLIC 24 are briefly summarized hereinbelow.

| FUNCTION | DESCRIPTION |
|---|---|
| Battery feed - | Feeding the direct currrent required for subscriber telephone set operation from power supply block 48. |
| Overvoltage protection - | Protection against high voltage signals such as lightning surges. |
| Ringing - | Application of a ringing AC signal from power supply 48 or ringing generator 49 (Fig. 6) when a call is directed to a subscriber. |
| Supervision - | Monitoring of the off-hook condition of a subscriber and detection of dialing pulses, for the control and timing unit 30. |
| Test - | Provision for testing and fault location facilities, for use by control and timing unit 30. |
| Metering Signal - | Feeding 16 or 12 Khz for operating metering apparatus in local unit through control and timing unit 30. |

Audio signals to and from SLIC 24 are coupled to a 2W to 4W converter 26 which separates the received and transmitted audio signals. The transmitted audio signals are filtered and converted to digital PCM code in an Analog to PCM converter 28. Digital samples of the transmitted audio signals are outputted to a control and timing unit 30 (Fig. 2B) via a serial bit stream at a rate of 64Kbps. Digital samples of received audio signals arrive from control and timing unit 30 to analog to PCM converter 28 via a receive serial bit stream. After conversion from digital (PCM) to analog, the audio signal is filtered and transferred to 2W to 4W converter 26.

Signals from a subscriber 32 are interfaced and converted to 4W digital form via a SLIC 34, a 2W to 4W converter 36 and an analog to PCM converter 38. Analog to PCM converter 38 is connected to control and timing unit 30 via the same transmit serial bit stream but in a different timeslot.

The operation of SLIC 34, 2W to 4W converter 36 and analog to PCM converter 38 is identical to the operation of SLIC 24, 2W to 4W converter 26 and analog to PCM converter 28 described previously. The transmit serial bit stream is applied from control and timing unit 30 to a digital modem 40. Digital samples of received audio signals arrive from control and timing unit 30 to analog to PCM converter 38 via the receive serial bit stream, but in a different timeslot.

A subscriber 42 is interfaced via a SLIC 44 and 2W to 4W converter 45 in the same manner as subscriber 22 is interfaced with SLIC 24 and 2W to 4W converter 26. The audio signal is buffered by a 4W to 2W converter 46. The analog output of converter 46 which consists of two way audio signals is connected to a line interface 47. The control and supervisory signals are connected in the same way to SLIC 44 as they are connected to SLIC 24.

SLICS 24, 34, 44 transfer off-hook and dialing information to control and timing unit 30. This information is multiplexed and inseted into the transmit bit stream to the digital modem 40. The off-hook and dialing control signal information of the three subscribers is transmitted using 24 Kbps of the transmit bit stream towards the exchange side terminal.

SLICS 24, 34 and 44 receive ringing and metering commands from control and timing unit 30 in accordance with the control signals received in the digital bit stream from the exchange side terminal 14.

Digital modem 40 transmits and receives high speed data on the two-wire copper pair using a conventional echo cancelling technique. Echo signals resulting from the transmitted signals are estimated and subtracted from the received signal, thus preventing the interference of echo with signal reception. The signals are transmitted using differential biphase coding, characterized in that it has a low spectral content at low frequencies. The signal spectrum of this coding at a 160 Kbps data rate is centered at approximately 120 KHz and is negligible at frequencies below 10 KHz and above 280 KHz.

In the transmit and in the receive direction, the 160 Kbps are divided as follows:
- 128 Kbps in each direction for two PCM speech channels (or 4 ADPCM-coded speech signals). Alternatively, the 128 Kbps can be used for one PCM speech channel and on 64 Kbps digital data channel or even for two 56/64 Kbps digital data channels. The 64 Kbps interface is in accordance with CCITT Recommendations G.703 or V.35.
- 24 Kbps for transmission of off-hook and dialing status of the three subscribers. In the receive direction a 24 Kbps bit stream is used for receipt of ringing and metering information relating to the three subscribers.
- 8 Kbps for intermodem synchronization.

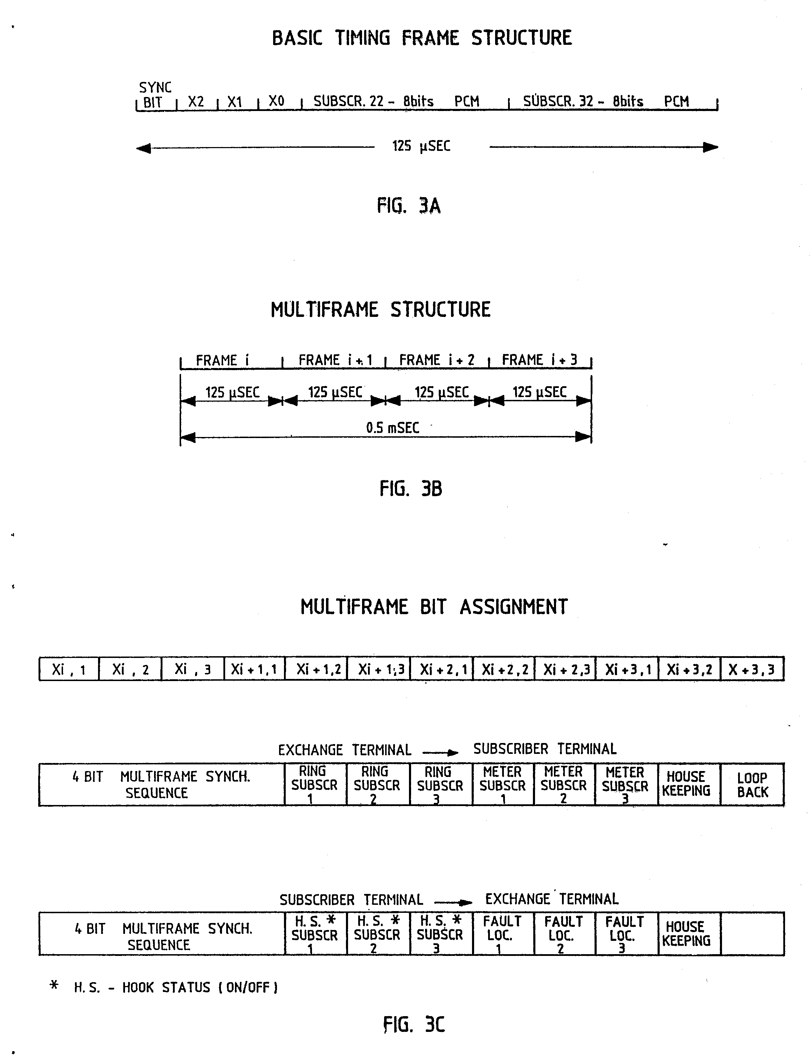

The digital modem 40 may be implemented by a Mitel MT - 8972A chip. Control and timing unit 30 and digital modem 40 are designed to provide a timing arrangement shown in Figs. 3A - 3C respectively as a basic timing frame structure, a multiframe structure, and a multiframe bit assignment. In Fig. 3A, the basic timing frame structure is broken down into 20 bits, with the three bits after the sync bit not being used for voice communication, but instead being reserved for control signal information. The twenty bits of the basic frame are transmitted from the digital modem at a frame rate of 8 KHz which results in a data rate of 160 Kbps.

When these basic frames are built together in groups of four, a multiframe structure is produced as shown in Fig. 3B. Since each of these four frames provides three signaling bits, a total of twelve bits is available for the communication of control signal information in two directions, between the exchange side terminal 14 and the subscriber side terminal 12 and at the same time in reverse. The twelve bits are shown broken down in a multiframe bit assignment (Fig. 3C) for each of these two types of control signal communications. This provides the ability to use the digital channel for all the control signal information in both directions, including that related to the analog channel itself. The multiframe rate is 2 KHz and therefore with every multiframe transmission, the control signals are updated with an update interval of 0.5 msec.

Thus, for the analog channel, the control signal information related to ringing and metering is transmitted in digital form from the exchange side terminal 14 to the subscriber side terminal 12, where it is regenerated to apply the appropriate control signals. Likewise, the hook status (off-hook/on-hook), fault location and dialing control signal information is transmitted in digital form from the subscriber side terminal 12 to the exchange side terminal 14, where it is regenerated to apply the appropriate control signals.

The control and timing apparatus 30 is the unit which creates the multiframe structure so that it can arrange all of the appropriate information in the individual slots of the time frame and also extract the proper information from these same time slots from the exchange side terminal 14 or the subscriber side terminal 12 as needed. The subscriber units 22, 32 and 42 and the ringing generator 49 are interfaced through the control and timing apparatus 30 to receive the control signals from the digital modem 40, and since this information is provided in a serial bit stream, it is made available in a parallel form to provide control for all of the subscribers in a continuous timing operation.

In accordance with the present invention, the physical interface of the audio channel and the two digital channels is accomplished by a connection between them in the line interface 47 associated with the subscriber side terminal 12, and in the the line interface 52 associated with the exchange side terminal 14.

Line interface 47 combines two signals in the transmit direction and separates them in the receive direction in the following manner:
- digital modem 40 signals occupy the frequency band above 10KHz.
- audio signals from/to 4W to 2W converter 46 occupy the frequency band below 4KHz.

The line interface 47 multiplexes the two signals in the frequency domain. The output from line interface 47 is fed to the telephone line towards the telephone exchange 16.

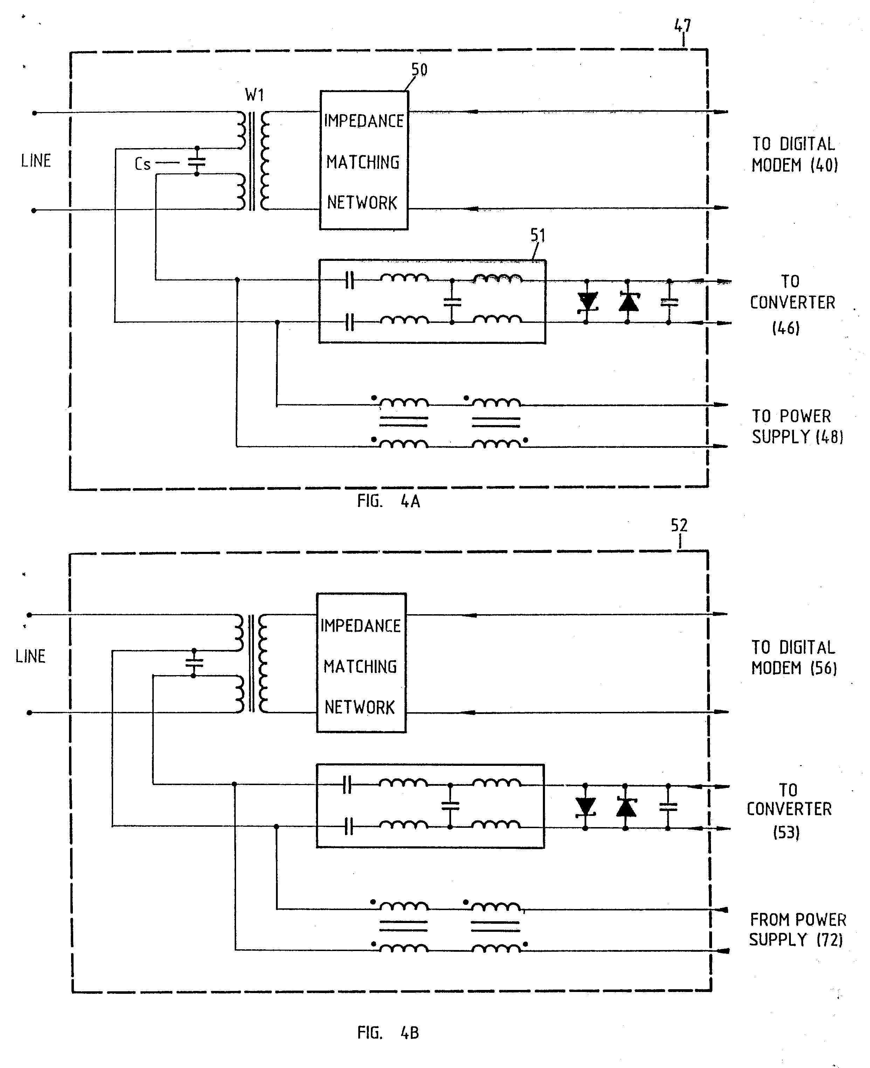

As shown in Fig. 4A, the line interface 47 in the subscriber side terminal 12 connects the line to the digital modem 40 through transformer W1 and an impedance matching network 50 for matching the digital modem 40 impedance to the line impedance. The analog channel is connected via converter 46 which is connected across a low-pass filter 51 having DC blocking. The filter 51 input is connected across a capacitor $C_S$ which is in series with the split windings on the primary of transformer W1. Thus, the analog channel is connected via a

6

portion of the line impedance across series capacitor $C_s$, which provides a preliminary stage of low-pass filtering and avoids the typical design problem associated with impedance matching where a parallel connection across the entire line impedance is used.

Proper separation between the frequency spectrum of the audio channel and that of the digital channels in the frequency domain is achieved by the line interface 47 so that there is no effect on the digital modem from the audio channel in terms of its frequency range of operation.

The line interface 47 also addresses the design factor of loading of one channel by the other, which causes undesired energy transfer. The main issue here is to maintain the characteristics of the audio signal in the frequency domain although it is loaded by the digital modem. This is done by deleting the frequency response of the digital modem in the frequency range of the audio signal, in such a way that the highest frequency of the audio signal will not be degraded.

The subscriber side terminal 12 is typically powered by remote power feeding from the exchange side terminal 14 via the single telephone line connected between them. The DC current is separated in the line interface 47 and applied to a power supply 48, which is connected in line interface 47 via two sets of series bifilar wound chokes L1-L4, one set configured in the common rejection mode and the other in the differential rejection mode. Chokes L1-L4 are connected in parallel with the input of filter 51.

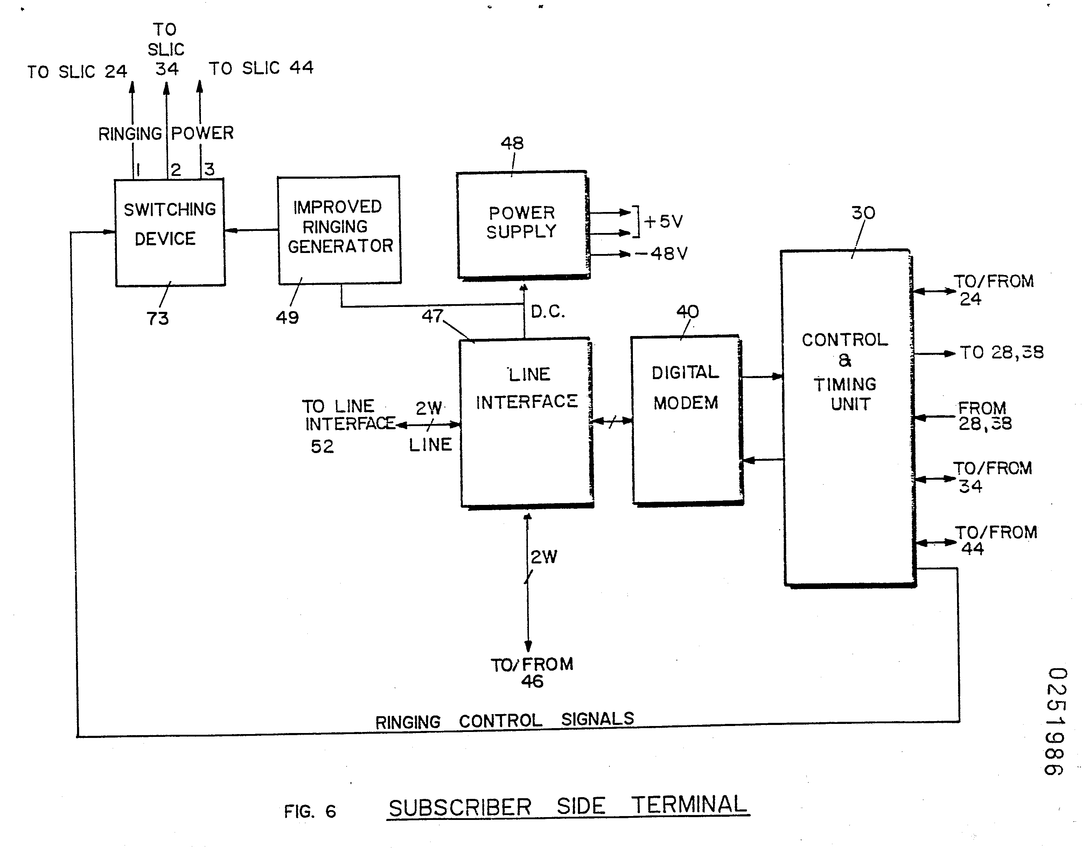

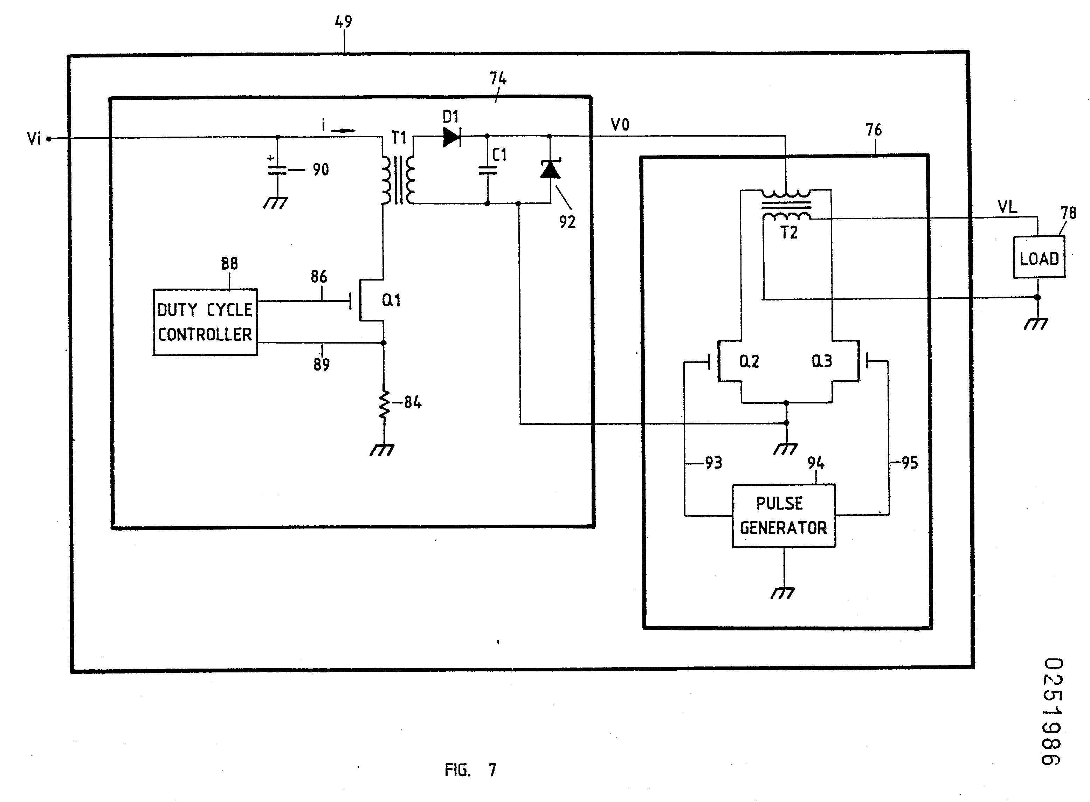

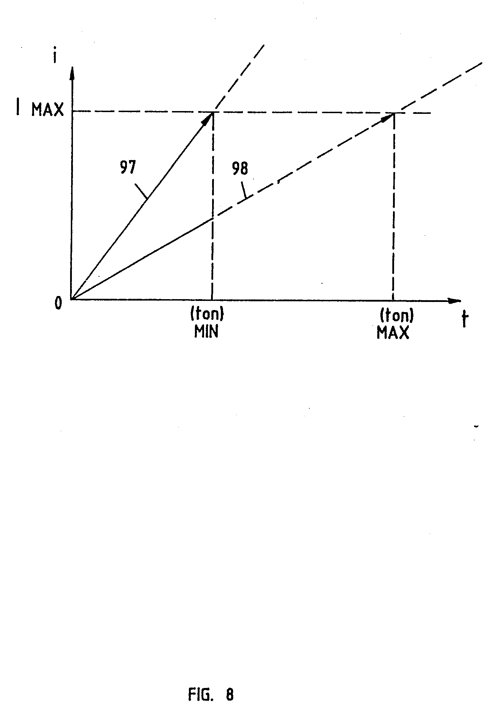

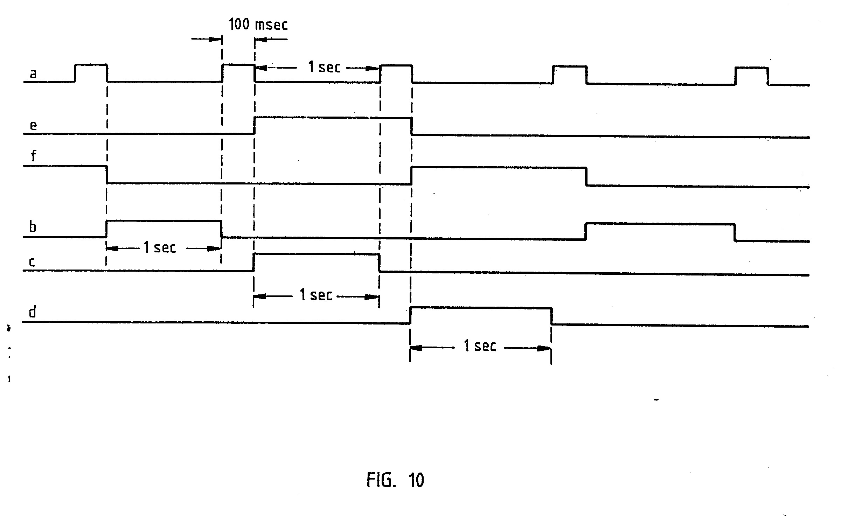

In Fig. 4A, the power supply 48 receives power from the line, or optionally, the input energy of the power supply 48 is supplied locally from AC mains. Power supply 48 generates all the required voltage for the subscriber side terminal 12, including the ringing power for the subscriber ringer sets. In Figs. 6-10, an alternative approach is shown for powering the ringer sets of the three subscribers 22, 32 and 42 using an improved ringing generator 49.

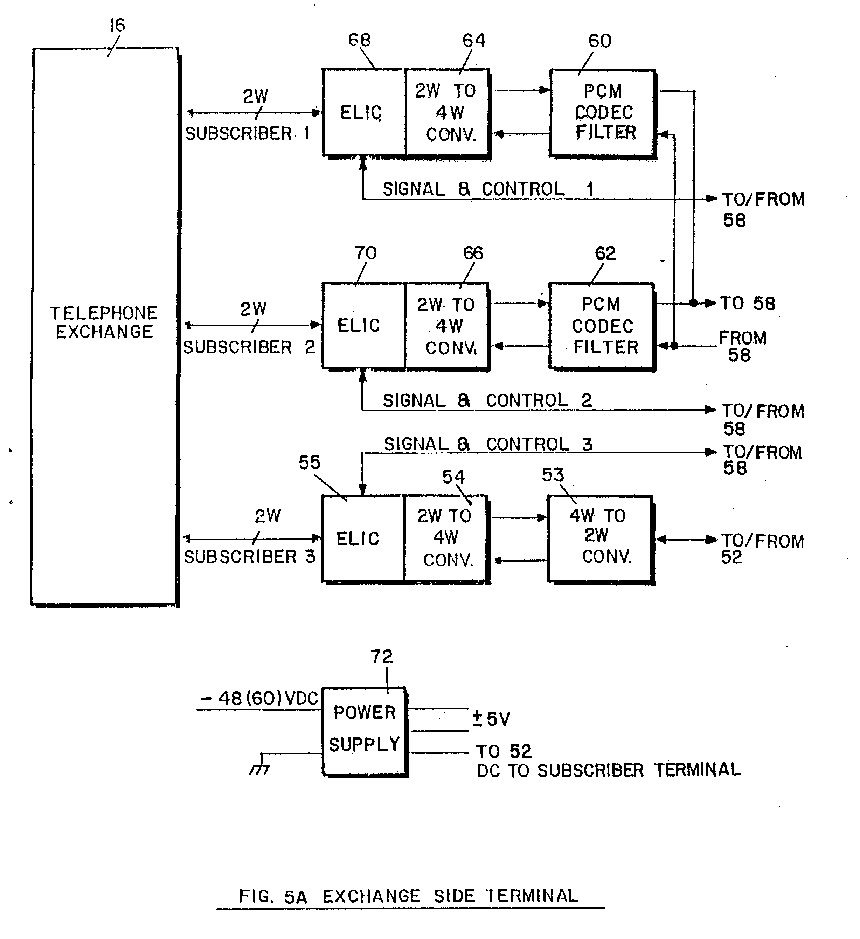

Fig. 4B shows a structure similar to line interface 47 for use as line interface 52 of the exchange side terminal 14, as decribed further herein in connection with Figs. 5A-5B. The only difference in operation between line interfaces 47 and 52 is that line interface 52 injects the DC power for remote power feeding while line interface 47 extracts the remotely fed DC power for use of subscriber side terminal 12.

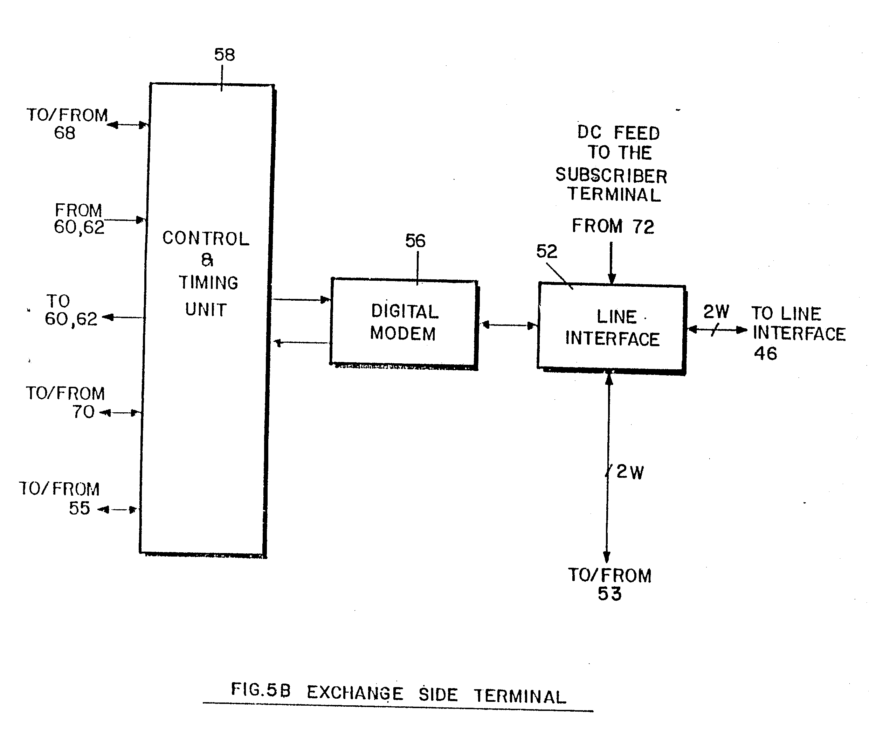

Reference is now made to Figs. 5A and 5B which illustrate in block diagram form, exchange side terminal 14 of Fig. 1B. A bidirectional, 2W line connects the line interface 47 of subscriber side terminal 12 to line interface 52 of exchange side terminal 14. Signals are communicated along the bidrectional 2W line and comprise:
- 160 Kbps bidirectional digital bit stream transmitted in the frequency band above 10 KHz.
- bidirectional audio signal of the third subscriber transmitted in the frequency band below 4 KHz.
- DC remote power feeding

Line interface 52 inserts D.C. current into the 2W line and separates the bidirectional signal such that the audio portion thereof is directed to a 4W to 2W converter 53, and the bidirectional bit stream is directed to digital modem 56. The operation of digital modem 56 is similar to the operation of digital modem 40 in Fig. 2B. The 160 Kbps biphase signal is detected and is transferred to control and timing unit 58. The transmit bit steam also has a bit rate of 160 Kbps and is transferred from control and timing unit 58 to digital modem 56.

Control and timing unit 58 separates the 160 Kbps bit stream into three major parts:
- 128 Kbps in each direction for two PCM speech channels (or 4 ADPCM-coded speech signals) to and from PCM to Analog converters 60 and 62. Alternatively, the 128 Kbps can be used for one PCM speech channel and one 64 Kbps digital data channel or even for two 56/64 Kbps digital data channels as described earlier in connection with subscriber side terminal 12 of Figs. 2A - 2B.
- 24 Kbps for transmission of ringing and metering information of the three subscribers. In the receive direction a 24 Kbps bit stream is used for receipt of off-hook and dialing status control signals relating to the three subscribers.
- 8 Kbps for intermodem synchronization.

In the direction towards the exchange the two PCM signals, at 64 Kbps rate each are routed from control and timing unit 58 to PCM to Analog converters 60 and 62. Analog audio signals are routed from PCM to Analog converters 60 and 62 to 4W to 2W converters 64 and 66 respectively. In the direction from the exchange to the exchange terminal, analog audio signals are routed from 2W to 4W converters 64 and 66 via analog to PCM converters 60 and 62 respectively to control and timing unit 58. The bidirectional audio signals from 2W to 4W converters 64 and 66 are routed to exchange line interface circuits (ELIC) 68 and 70 respectively. The audio signal of the third subscriber is routed dirrectly from the line interface 52 via 4W to 2W converter 53 and via 2W to 4W converter 54 to an exchange line interface circuit 55.

The function and operation of exchange line interface circuits 55, 68 and 70 are all identical. Therefore, the function and operation of only circuit 68 will be described.

The functions of interface circuit 68 are:
- Off-hook and dialing repetition in accordance with the control signals arriving from subscriber side terminal 12.
- Ringing signal detection and transmission thereof to control and timing unit 58.
- Metering signal detection and transmission thereof to control and timing unit 58.

The interface circuits 68, 70 and 55 are each connected via a 2W line to a respective subscriber interface in telephone exchange 16.

The circuits of exchange side terminal 14 are powered by a power supply 72 which is typically fed from the direct current power source of telephone exchange 16. Power supply 72 inserts power in the line as shown in Fig. 4B.

It is appreciated that PCM to Analog converters can be preceded by speech compression devices such as ADPCM in order to provide further digital line multiplication so that each 64 Kbps bit stream can carry two or more simultaneous conversations.

In accordance with a preferred embodiment of the invention, the circuit elements may be embodied in commercially available semiconductor chips as follows:

SLIC (24, 34, 44) and 2W to 4W converter (26, 36, 45) - HC 5508

ELIC (68, 70, 55) and 2W to 4W converter (64, 66, 54) - HC 5580

The HC 5508 and 5580 chips are available from Harris Semiconductor of the U.S.A.

PCM to Analog Converters including a codec and filter (28, 38, 60, 62) - 5057 are available from either National Semiconductor or Thompson Semiconductor.

Digital Modems (40, 56) MT 8972 are available from Mitel of Canda.

Referring now to Fig. 6, there is shown an alternative embodiment of the subscriber side terminal 12 wherein the power from the exchange side terminal 14 is separated in the line interface 47 and applied to the power supply 48 and improved ringing generator 49. As before, the power supply 48 generates all the required voltage for the subscriber side terminal 12, except for the ringing voltage which is generated by ringing generator 49, as controlled by the ring detection and hook-switch signals from control and timing unit 30. Optionally the input energy of the power supply 48 and ringing generator 49 is supplied locally from AC mains.

The ringing set associated with each of the three subscribers shown in subscriber group 15 of Fig. 1B is operated by the power output from ringing generator 49 of Fig. 6. As is discussed further herein, the ringing set impedances of the three subscriber units 22, 32 and 42 may not be uniform, whereas, for example, each of the sets is produced by a different manufacturer, or automatic answering units are mixed with regular telephones incorporating thermistors, or each of the subscribers has more than one telephone unit on his line.

In accordance with the principles of present invention, a constant input power is supplied to ringing generator 49 to enable a fixed AC ringing power output to be delivered to these loads. This results in increased efficiency for the total system since the output voltage is optimized for the given loads. Additional efficiency is achieved by provision of a switching device 73 in subscriber side terminal 12 for delivery of the AC ringing power to the loads in a time sharing fashion as herein described.

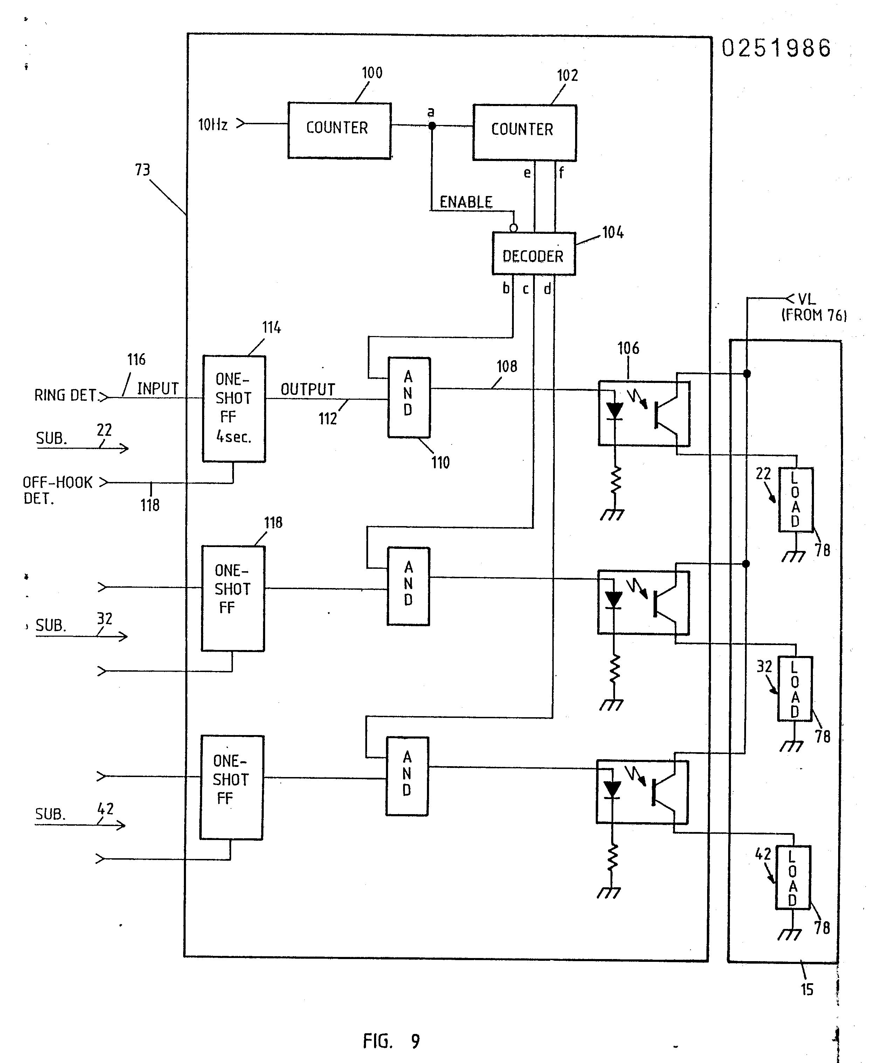

Referring now to Fig. 7, there is shown a schematic circuit diagram of the preferred embodiment of the ringing generator 49 depicted in Fig. 6. The ringing generator 49 comprises a flyback converter 74 and an inverter 76 which operate in a coordinated fashion to provide load 78 with power during a ringing interval. Load 78 represents the total impedance of the ringing sets of associated with one of the respective three telephone subscribers 22, 32 and 42 shown in Fig. 1B. Flyback converter 74 comprises a transformer T1 having its primary coil connected in series with a switching transistor Q1 and a resistor 84. Transistor Q1 is an FET type, and is gated on or off in accordance with trigger signal 86 which it receives from a duty cycle controller 88, which is operated with a predetermined frequency, such as a PWM controller. Controller 88 is controlled in a current mode by a signal 89 which relates the voltage across resistor 84 to its resistance, for sensing a constant current in the primary coil. Input voltage Vi from line interface 47 is impressed across the series connection of the T1 primary, transistor Q1 and resistor 84. A filter capacitor 90 on the primary coil of transformer T1 eliminates voltage transients on the input voltage Vi during the switching of Q1.

The secondary coil of transformer T1 is connected through rectification diode D1 across storage capacitor C1, which is voltage limited by parallel connection therewith of Zener diode 92. The output voltage Vo is taken from across capacitor C1 and is fed to a center voltage tap on the primary of transformer T2, which has its secondary connected across load 78.

Inverter 76 produces AC ringing power for load 78 by switching the polarity of the T2 primary connection to ground through switching transistors Q2 and Q3. The transistors Q2 and Q3 are switched via triggering signals 93 and 95 from pulse generator 94, which typically operates at a 25 Hz oscillation frequency.

In accordance with the principles of the present invention, duty cycle controller 88 controls the input power fed to ringing generator 49 to maintain a constant level. With a constant input power to ringing generator 49 provided at voltage Vi, the output power at voltage Vo will be nearly constant, since a high level of efficiency is maintained. The AC ringing power is delivered to load 78 at an output voltage (VL) determined by its impedance characteristics. The operation of the circuitry of Fig. 7 is now described.

In operation, when the Q1 transistor is switched-on by trigger signal 86 from controller 88, input voltage Vi is applied to the primary coil of T1 and an input current "i" is developed. Input current "i" builds up in accordance with a known relationship and ceases to flow when transistor Q1 is switched-off. The following equation describes the value of the input current in this operation:

$$i = (1 / Lp) \, Vi \, * \, t_{on} \quad (1)$$

where $Lp$ = inductance of transformer T1 primary coil;

$Vi$ = input voltage;

$t_{on}$ = time during which Q1 is in switched-on state; and

$t_{off}$ = time during which Q1 is in switched-off state.

When the value of input current "i" reaches a predetermined level, controller 88 senses this input current level via voltage signal 89 and switches off transistor Q1. Within this time period, the amount of energy stored (ES) in the electromagnetic field of the T1 primary coil is given by:

$$ES = (1/2) \, Lp \, I^2 max \quad (2)$$

The stored energy given by equation (2) is transferred to the secondary side of transformer T1 and through diode D1, and is temporarily stored in capacitor C1 which charges up to develop an output voltage Vo. Repetition of the transistor Q1 switching operation defines the duty cycle as the ratio of the T1 primary coil charging time (Q1 on-time) to the repetition time period. This achieves a nearly constant output power Pout for load 78 which can be represented by:

$$P_{out} = n * ES * f \quad (3)$$

where n = efficiency

ES = energy stored in primary coil of T1; and

f = repetition frequency of Q1 switched-on state, which is equivalent to:

$$f = 1/(t_{on} + t_{off}) \quad (4)$$

It can be shown from equations (1) - (4) that:

$$P_{out} = n * Vi^2 * D^2/(2 Lp * f) \quad (5)$$

where D = duty cycle determined by controller 88, and can be expressed as:

$$D = t_{on}/(t_{on} + t_{off}) \quad (6)$$

It will be appreciated by those skilled in the art that in accordance with equation (5), the load 78 is provided with a nearly constant power output by converter 74 independent of the load impedance. Thus, by controlling the converter 74 duty cycle to maintain a constant input power level, the AC ringing output power is controllable and can be determined at a minimum value which will operate the ringing sets of load 78. Since the amount of input power supplied to the converter 74 by the source is fixed, the invention provides a nearly constant output AC ringing power.

Referring now to Fig. 8, there is shown a graphical illustration of the current in the primary coil of transformer T1 as a function of the input voltage Vi, as per equation (1). It can be seen from equation (1) that for a given maximum value (Imax) of input current "i", the magnitude of the input voltage Vi applied to converter 74 is inversely proportional to the time period "$t_{on}$" during which transistor Q1 is in the switched-on state.

Thus, two different graph patterns 97 and 98 are shown, each corresponding respectively to values of Vi at a maximum and a minimum level. That is, for graph pattern 97, input voltage (Vi)max brings the input current "i" up to its maximum value Imax within a time period ($t_{on}$)min. For pattern 98, a longer time period ($t_{on}$)max is shown, corresponding to input voltage (Vi)min. In the preferred embodiment, the range of input voltages Vi with which the converter 74 is supplied varies from 42 to 120 DC volts.

The ringing generator should be designed to achieve high efficiency under all expected conditions of operation, i.e., extreme values of input voltage Vi and the load impedances. Thus, in the worst combination of the lowest expected input voltage Vi and lowest load impedances, the duty cycle should be such that $t_{on}$ will be sufficient for the input current to reach Imax and $t_{off}$ will be sufficient to transfer substantially all of the stored energy to the load.

Referring again to Fig. 7, the converter 74 output voltage Vo is fed to a center winding tap on the primary of transformer T2. The secondary of transformer T2 develops an output voltage (VL) which is related to the transformer turns ratio, and this voltage is applied to load 78 with alternating reverse polarity in accordance with the operation of pulse generator 94 and the switching transistors Q2 and Q3. During the first half of the 25 Hz period, transistor Q2 is switched-on by triggering signal 93, and Q3 is kept switched-off. During the second half period, Q2 is switched-off and Q3 is switched-on by triggering signal 95, so that the voltage on the load is reversed.

With a turns ratio of 1:1 on transformer T2, the output voltage Vo is halved and the output current is doubled in relation to these parameters as seen at load 78. While the current doubling is theoretically detrimental to the converter 74 efficiency due to higher $I^2R$ losses, in practical terms these losses are negligible since the currents involved are low if controller 88 is operated at a frequency on the order of 50 kHz.

For design purposes, the arrangement of the converter 74 and inverter 76 as shown enables the voltage rating of transistor Q1 to be reduced. This is because the maximum voltage seen by this transistor is the sum of the input voltage on the primary coil of T1 and of the secondary voltage reflected back to the primary. In the case of a 1:1 ratio for these windings, for a 160 volt input voltage (Vi) and a 40 volt output voltage (Vo), the Q1 voltage rating is 200 volts. Zener diode 92 eliminates a high secondary voltage reflection when there is no load by limiting output voltage Vo.

An example of the application of the constant power output AC ringing generator 49 of the invention is now described.

In Fig. 7, where the total load 78 may consist of three telephones, one of them may have a high impedance, on the order of 9k ohms. If the other two telephones are each assumed to have a thermistor as part of the impedance, the initial high impedance of these two loads will be lowered to approximately 3k ohms each, once the thermistor operating characteristic has been achieved. The total impedance of the parallel combination will then be on the order of 1285 ohms, and if the ringing generator is controlled so as to deliver 1.1 watt of output power, the known $V^2/R$ relationship gives the steady-state output voltage (VL) at approximately 38 volts. In the normal case, this will be sufficient to operate the high impedance telephone ringing set.

The thermistor operating characteristic is achieved by application of a high initial output voltage (VL) at the beginning of the ringing interval, after which a certain level of energy is transferred to the thermistor to warm it up and reduce its impedance. Since the thermistor exhibits a time constant in achieving this operating characteristic, it would take some time to cool down and return to its initial high impedance value. For this reason, the periodic ringing interval is made shorter than this time constant, and the thermistor reaches a stabilized value of about 1.5k ohm from a nominal value of more than 10k ohms.

In contrast with a commonly used ringing generator designed as a constant voltage source, the present invention achieves the steady-state operating condition more rapidly because the high initial impedance determines that the constant power output will be transferred to the load with a high initial output voltage (VL).

The constant power output AC ringing generator 49 of the invention effectively utilizes the reduction in the impedance of the load due to the change in the operating characteristic of the thermistor. As seen from the above example, this is because once the impedance of the load has been reduced, the constant power output of the ringing generator is sufficient for the ringing set of each of the three loads. This is true despite the possibility that their individual impedances are not properly matched or they are not uniform in value. This conclusion is also appropriate for the case of threee electromechanical units having thermistors.

The constant power output ringing generator of the invention provides a good solution to the overall design problem of achieving maximum energy conservation in the telephone system. This is because the ringing generator exploits the change in the operating characteristic and resulting reduced impedance level of the loads during the ringing interval, to minimize the needed power output and yet maintain effective operation of the ringing set associated with each load.

An additional feature of the present invention achieves increased energy conservation in the system of Fig. 1B by incorporating time sharing between the ringing intervals of several subscribers in subscriber group 15. In this way, the impedance of each of the subscriber telephones is alternately switched as a load 78 on ringing generator 49.

Turning now to Figs. 9-10, there is shown a circuit diagram and associated timing diagram of a time sharing switching device 73 (Fig. 6) for a plurality of subscribers 22, 32 and 42 in subscriber group 15. The load 78 associated with each of subscribers 22, 32 and 42 is arranged to operate with the switching arrangement under the control of counters 100, 102 and decoder 104. The operation of each of the subscriber units is identical, so that only the circuitry associated with subscriber 22 is now described.

In the preferred embodiment, the switching device 73 is implemented using digital circuitry employing edge-triggering techniques. The load 78 of subscriber 22 is fed by inverter 76 at voltage (VL) through FET optoisolator 106. A ring enable signal 108 associated with subscriber 22 is produced by AND gate 110 and provided to control the FET optoisolator 106 operation. The AND gate 110 receives two inputs, signal "b" from decoder 104 and output signal 112 from a 4 second retriggerable one-shot flip-flop 114. The input to one-shot 114 is a ring detection signal 116, which is supplied from the telephone exchange terminal 16 (Fig. 1B) to indicate a particular subscriber's line has been reached by an incoming call. Once the telephone unit handset is lifted, an off-hook detection signal 118 is provided to the one-shot 114 to reset its output signal 112 in a "low" state.

In operation, counter 100 is supplied with a 10 Hz clock signal for establishing the period of the signal having waveform "a", which signal is used to enable decoder 104 and provide timing to counter 102. In the preferred embodiment, counter 100 is set for modulo 11, 1 second ringing and 100msec delay, and counter 102 is set for modulo 3, for three subscribers. Decoder 104 provides three signals having respective waveforms "b", "c" and "d", each of which represents the ringing interval respectively associated with each of subscribers 22, 32, and 42. These signals are staggered so that each is "high" for a duration of 1 second, with a 100 msec delay between consecutive ringing intervals for the several subscribers.

For subscriber 22, when the ring detection signal 116 to one-shot 114 is "high", output signal 112 is "high" for a repeatable 4 second period to avoid partial ringing intervals. Ring enable signal 108 is provided to FET optoisolator 106 by AND gate 110 for the duration of the ringing interval shown on the "b" waveform. The FET optoisolator 106 connects voltage (VL) from inverter 76 to subscriber 22, thereby delivering AC ringing power from generator 49. If additional ringing detection signals are present for subscribers 22-42, the ringing intervals will be staggered and non-simultaneous for each of the three subscribers. Thus, the load placed on generator 49 is reduced to that of one subscriber for any one ringing interval.

In addition, the operation of ringing generator 49 provides the aforementioned 100 msec delay as a recovery time between the end of the previous ringing interval for one telephone subscriber and the start of the ringing interval for the next one. This enables ringing generator 49 to reach the highest output voltage (VL) possible by extending slightly the charging time on capacitor C1. The favorable result of this adjustment is to provide a high initial output voltage (VL) with which to change the thermistor operating characteristic and reduce the initial load impedance and output power requirements.

Additional energy savings can be achieved by disabling the operation of the inventive ringing generator during the intervals when no ringing operation is required by any of the three subscribers.

It will be appreciated by persons skilled in the art that the present invention is not limited to what has been particularly shown and described hereinabove. Rather the scope of the present invention is defined only by the claims which follow:

## Claims

1. Telephone line multiplication apparatus comprising:
means for connecting a plurality of telephone subscribers to a telephone exchange over a single two-wire telephone line which carries voice information and control signal information such as off-hook/on-hook, dialing, ringing, metering and the like, wherein said means for connecting comprises a subscriber side terminal and an exchange side terminal interconnected by said telephone line;

first means for communicating voice information with at least one of the plurality of telephone subscribers in digital form;

second means for communicating voice information with at least one of the plurality of telephone subscribers in analog form; and

means for communicating said control signal information, wherein said control signal information communication means is characterized in that it communicates the control signal information relating to the operation of the second apparatus in digital form.

2. Apparatus according to claim 1 wherein said subscriber side terminal receives power which is provided remotely from said exchange side terminal over said two-wire telephone line.

3. Apparatus according to claim 1 or 2 wherein said plurality of telephone subscribers comprises three telephone subscribers.

4. Apparatus according to claim 3 wherein said first means for communicating is operative to provide analog communication for two subscribers along with control signal information for all three subscribers.

5. Apparatus according to claim 1 or 2 and also comprising speech compression apparatus associated with said first means for increasing the number of telephone subscribers communicating with said first means.

6. Apparatus according to claim 1 or 2 wherein said subscriber side terminal includes:

an analog-digital interface;

means for coupling at least one first telephone subscriber to said analog-digital interface;

digital modem apparatus for coupling said analog-digital interface to said two-wire telephone line; and

analog transmission means for coupling at least one second telephone subscriber to said two-wire telephone line.

7. Apparatus according to claim 6 wherein said digital modem apparatus and said analog transmission means are coupled to said two-wire telephone line through a line interface means for matching the impedance of said line, wherein said line interface means comprises at least two impedance elements which are connected serially, a first impedance element for coupling said digital modem apparatus and a second impedance element for coupling said analog transmission means across a portion of said two-wire telephone line impedance.

8. Apparatus according to claim 7 wherein said first means is operative to communicate in differential biphase coding.

9. Apparatus according to claim 1 or 2 wherein said exchange side terminal includes:

an analog-digital interface;

means for coupling at least one first telephone exchange subscriber interface to said analog-digital interface;

digital modem apparatus for coupling said analog-digital interface to said two-wire telephone line; and

analog transmission means for coupling at least one second telephone exchange subscriber interface to said two-wire telephone line.

10. Apparatus according to claim 9 wherein said digital modem apparatus and said analog transmission means are coupled to said two-wire telephone line through a line interface means for matching the impedance of said line, wherein said line interface means comprises at least two impedance elements which are connected serially, a first impedance element for coupling said digital modem apparatus and a second impedance element for coupling said analog transmission means across a portion of said two-wire telephone line impedance.

11. Apparatus according to claim 10 wherein said first means is operative to communicate in differential biphase coding.

12. Apparatus according to claim 2 and further comprising an improved ringing generator apparatus wherein the power provided remotely from the exchange side terminal is fed as input power to said improved ringing generator apparatus for delivering power to the load presented by the plurality of telephone subscribers, said ringing generator apparatus comprising:

means for storing energy;

controller means operable to determine a duty cycle within which the input power is applied to said energy storage means for storing energy therein at a fixed level such that the input power utilized is constant;

inverter means for generating AC ringing power to be delivered to the load; and

means for transferring said stored energy to said inverter means such that said AC ringing power is generated at a level in accordance therewith,

wherein said AC ringing power is delivered to the load at an output voltage determined by the load impedance characteristics.

13. The apparatus of claim 12 wherein said energy storage means, duty cycle controller means and energy transfer means together comprise a constant energy flyback converter.

14. The apparatus of claim 13 wherein an inductor is used as said energy storage means.

15. The apparatus of claim 14 wherein the amount of input power applied to the inductor is fixed with a given duty cycle with the result that the energy stored in the inductor is limited to a constant value.

16. The apparatus of claim 15 wherein said duty cycle controller means comprises a pulse-width modulated (PWM) current mode controller and a switching transistor together operable to provide a controllable input energy for storage in said inductor.

17. The apparatus of claim 15 wherein said duty cycle controller means comprises a switching transistor and current sensor operable to provide a controllable input energy for storage in said inductor.

18. The apparatus of claim 15 wherein a capacitor is used as said energy transfer means and receives the stored energy from said inductor for transfer to said inverter means.

19. The apparatus of claim 18 wherein said inverter means comprises a pair of switching transistors driven by a pulse generator having a predetermined frequency, said switching transistors being arranged to reverse the polarity of said output voltage with which said AC ringing power is transferred to the load.

20. The apparatus of claim 19 wherein a switching device is provided by which said AC ringing power is supplied in a time sharing fashion, with the ringing interval for each of said subscribers being staggered and non-simultaneous with the ringing interval of other subscribers, such that the load for each subscriber is alternately switched to receive said AC ringing power.

21. The apparatus of claim 20 wherein said switching device provides a recovery time period between the end of a ringing interval on one load and the start of the next ringing interval on the next load, said recovery time period allowing the ringing generator to develop the AC ringing power with the highest output voltage possible for the beginning of the next ringing interval.

22. In a telephone line multiplication apparatus according to claim 2 and further comprising ringing generator apparatus, a method of operating said ringing generator apparatus wherein the power provided remotely from the exchange side terminal is fed as input power to said improved ringing generator apparatus for delivering power to the load presented by the plurality of telephone subscribers, said method comprising the steps of:

providing a means for storing energy;

determining a duty cycle within which the input power is applied to said energy storage means for storing energy therein at a fixed level such that the input power utilized is constant; and

generating AC ringing power in accordance with said stored energy level to be delivered to the load, wherein said AC ringing power is delivered to the load at an output voltage determined by the load impedance characteristics.

23. Telephone multiplication apparatus comprising:

means for connecting a plurality of telephone subscribers to a telephone exchange over a single two-wire telephone line which carries voice and digital data information and control signal information such as off-hook/on-hook, dialing, ringing, metering and the like, wherein said means for connecting comprises a subscriber side terminal and an exchange side terminal interconnected by said telephone line;

first means for communicating digital data information with at least one of the plurality of telephone subscribers in digital form;

second means for communicating voice information with at least one of the plurality of telephone subscribers in analog form; and

means for communicating said control signal information, wherein said control signal information communication means is characterized in that it communicates the control signal information relating to the operation of the second apparatus in digital form.

24. Apparatus according to claim 23 wherein said subscriber side terminal includes:

a digital data interface;

means for coupling at least one first telephone subscriber to said digital data interface;

digital modem apparatus for coupling said digital data interface to said two-wire telephone line; and

analog transmission means for coupling at least one second telephone subscriber to said two-wire telephone line.

25. Apparatus according to claim 24 wherein said digital modem apparatus and said analog transmission means are coupled to said two-wire telephone line through a line interface means for matching the impedance of said line, wherein said line interface means comprises at least two impedance elements which are connected serially, a first impedance element for coupling said digital modem apparatus and a second impedance element for coupling said analog transmission means across a portion of said two-wire telephone line impedance.

26. Apparatus according to claim 23 wherein said exchange side terminal includes:

a digital data interface;

means for coupling at least one first telephone exchange subscriber interface to said digital data interface;

digital modem apparatus for coupling said digital data interface to said two-wire telephone line; and

analog transmission means for coupling at least one second telephone exchange subscriber interface to said two-wire telephone line.

27. Apparatus according to claim 26 wherein said digital modem apparatus and said analog transmission means are coupled to said two-wire telephone line through a line interface means for matching the impedance of said line, wherein said line interface means comprises at least two impedance elements which are connected serially, a first impedance element for coupling said digital modem apparatus and a second impedance element for coupling said analog transmission means across a portion of said two-wire telephone line impedance.

28. Telephone line multiplication apparatus comprising:

means for connecting a plurality of telephone subscribers to a telephone exchange over a single two-wire telephone line which carries voice and digital data information and control signal information such as off-hook/on-hook, dialing, ringing, metering and the like, wherein said means for connecting comprises a subscriber side terminal and an exchange side terminal interconnected by said telephone line;

first means for communicating voice and digital data information with at least one of the plurality of telephone subscribers in digital form;

second means for communicating voice information with at least one of the plurality of telephone subscribers in analog form; and

means for communicating said control signal information, wherein said control signal information communication means is characterized in that it communicates the control signal information relating to the operation of the second apparatus in digital form.

29. Apparatus according to claim 28 and also comprising speech compression apparatus associated with said first means for increasing the number of telephone subscribers communicating with said first means.

30. Apparatus according to claim 28 or 29 wherein said subscriber side terminal includes:

an analog-digital and a digital data interface;

means for coupling at least one first telephone subscriber to said analog-digital and digital data interfaces;

digital modem apparatus for coupling said analog-digital and digital data interfaces to said two-wire telephone line; and

analog transmission means for coupling at least one second telephone subscriber to said two-wire telephone line.

31. Apparatus according to claim 30 wherein said digital modem apparatus and said analog transmission means are coupled to said two-wire telephone line through a line interface means for matching the impedance of said line, wherein said line interface means comprises at least two impedance elements which are connected serially, a first impedance element for coupling said digital modem apparatus and a second impedance element for coupling said analog transmission means across a portion of said two-wire telephone line impedance.

32. Apparatus according to claim 28 or 29 wherein said exchange side terminal includes:

an analog-digital and a digital data interface;

means for coupling at least one first telephone exchange subscriber interface to said analog-digital and digital data interfaces;

digital modem apparatus for coupling said digital data interface to said two-wire telephone line; and

analog transmission means for coupling at least one second telephone exchange subscriber interface to said two-wire telephone line.

33. Apparatus according to claim 32 wherein said digital modem apparatus and said analog transmission means are coupled to said two-wire telephone line through a line interface means for matching the impedance of said line, wherein said line interface means comprises at least two impedance elements which are connected serially, a first impedance element for coupling said digital modem apparatus and a second impedance element for coupling said analog transmission means across a portion of said two-wire telephone line impedance.

0251986

FIG. 1A (PRIOR ART)

FIG. 1B

0251986

FIG. 2A  SUBSCRIBER TERMINAL

0251986

FIG. 2B     SUBSCRIBER SIDE TERMINAL

0251986

## BASIC TIMING FRAME STRUCTURE

| SYNC BIT | X2 | X1 | X0 | SUBSCR. 22 – 8bits  PCM | SUBSCR. 32 – 8bits  PCM |
|---|---|---|---|---|---|

$\longleftarrow$ 125 $\mu$SEC $\longrightarrow$

### FIG. 3A

## MULTIFRAME STRUCTURE

| FRAME i | FRAME i + 1 | FRAME i + 2 | FRAME i + 3 |
|---|---|---|---|
| 125 $\mu$SEC | 125 $\mu$SEC | 125 $\mu$SEC | 125 $\mu$SEC |

0.5 mSEC

### FIG. 3B

## MULTIFRAME BIT ASSIGNMENT

| Xi , 1 | Xi , 2 | Xi , 3 | Xi + 1,1 | Xi + 1,2 | Xi + 1,3 | Xi + 2,1 | Xi + 2,2 | Xi + 2,3 | Xi + 3,1 | Xi + 3,2 | X + 3,3 |
|---|---|---|---|---|---|---|---|---|---|---|---|

EXCHANGE TERMINAL $\longrightarrow$ SUBSCRIBER TERMINAL

| 4 BIT   MULTIFRAME SYNCH. SEQUENCE | RING SUBSCR 1 | RING SUBSCR 2 | RING SUBSCR 3 | METER SUBSCR 1 | METER SUBSCR 2 | METER SUBSCR 3 | HOUSE KEEPING | LOOP BACK |
|---|---|---|---|---|---|---|---|---|

SUBSCRIBER TERMINAL $\longrightarrow$ EXCHANGE TERMINAL

| 4 BIT   MULTIFRAME SYNCH. SEQUENCE | H.S. * SUBSCR 1 | H.S. * SUBSCR 2 | H.S. * SUBSCR 3 | FAULT LOC. 1 | FAULT LOC. 2 | FAULT LOC. 3 | HOUSE KEEPING | |
|---|---|---|---|---|---|---|---|---|

* H.S. – HOOK STATUS ( ON/OFF )

### FIG. 3C

FIG. 4A

FIG. 4B

0251986

FIG. 5A  EXCHANGE SIDE TERMINAL

0251986

FIG.5B  EXCHANGE SIDE TERMINAL

FIG. 6    <u>SUBSCRIBER SIDE TERMINAL</u>

0251986

FIG. 7

0251986

FIG. 8

FIG. 9

FIG. 10